Europäisches Patentamt

European Patent Office

Office européen des brevets

(11) Publication number: **0 012 620**
**B1**

(12) **EUROPEAN PATENT SPECIFICATION**

(45) Date of publication of patent specification: **03.04.85**

(21) Application number: **79302912.5**

(22) Date of filing: **14.12.79**

(51) Int. Cl.⁴: **G 05 B 13/04,** G 05 D 3/20, G 05 B 19/18

(54) Closed loop type numerical-controlled machine tool.

(30) Priority: **15.12.78 JP 156692/78**
**31.01.79 JP 10227/79**
**14.02.79 JP 15905/79**
**14.02.79 JP 15906/79**

(43) Date of publication of application:
**25.06.80 Bulletin 80/13**

(45) Publication of the grant of the patent:
**03.04.85 Bulletin 85/14**

(84) Designated Contracting States:
**DE FR GB**

(56) References cited:
DE-A-2 055 668
GB-A-1 273 190
GB-A-1 361 211
GB-A-1 436 758
US-A-3 634 664
US-A-3 838 257

(73) Proprietor: **FANUC LTD**
**3580, Shibokusa Aza-Komanba**
**Oshino-mura, Minamitsuru-gun Yamanashi**
**Prefecture (JP)**

(72) Inventor: **Kurakake, Mitsuo**
**No. 2-16-2, Naito**
**Kokubunji-shi, Tokyo (JP)**

(74) Representative: **Bedggood, Guy Stuart et al**
**Haseltine Lake & Co. Hazlitt House 28**
**Southampton Buildings Chancery Lane**
**London WC2A 1AT (GB)**

(56) References cited:
M. SYRBE "Informationsverarbeitung in
technischen, biologischen und ökonomischen
Systemen" Vol. 1: "Messen, Steuern, Regeln
mit Prozessrechnern" 1972, AKADEMISCHE
VERLAGSGESELLSCHAFT, Frankfurt am Main,
pages 312 to 320
A.S.E.A. JOURNAL, Vol. 50, No. 5, 1977 L.
DANIELSEN "Position Measurement and
Positioning with the DS-8 System", pages 115
to 118

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

**SIEMENS-ZEITSCHRIFT, Vol. 49, No. 6, 1975
Erlangen E. MIKULASCHEK et al. "Sinumerik
10-0, 20-0 und 30-0, eine Familie numerischer
Steuerungen für einfache
Werkzeugmaschinen", pages 355 to 359**

## Description

This invention relates to a closed loop type numerical-controlled machine tool.

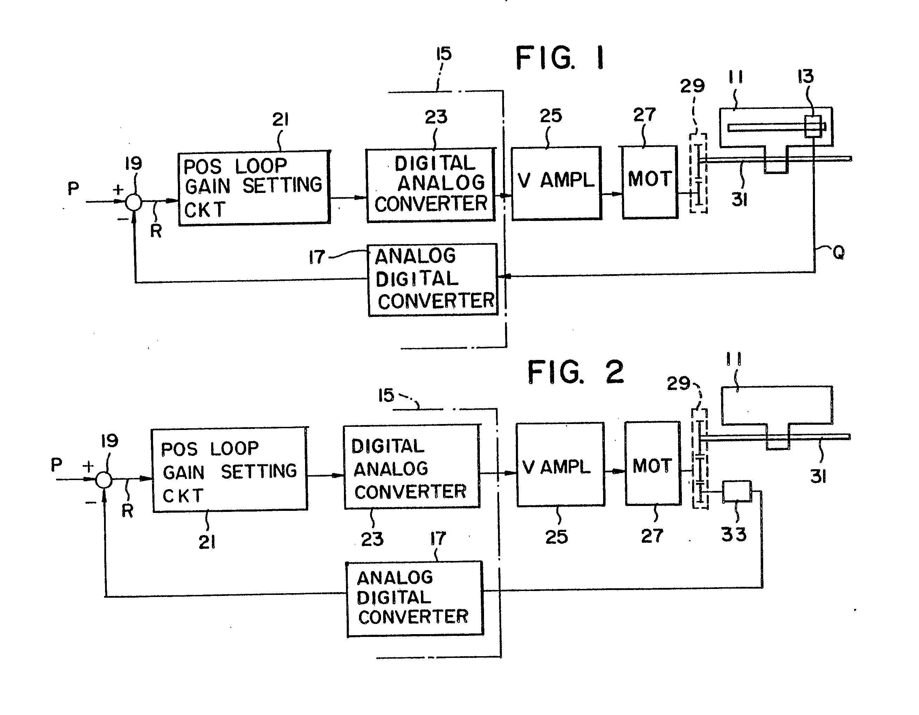

Previously proposed position control systems for numerical-controlled machine tools can be roughly divided into two types of systems: a first type of system employs a closed loop servo-mechanism such, for example, as is shown in Fig. 1 of the accompanying drawings, which Figure is a schematic block diagram, and a second type of system employs a semi-closed loop servo-mechanism such, for example, as is shown in Fig. 2 of the accompanying drawings, which Figure is also a schematic block diagram. In a closed loop system, as shown in Figure 1, a position detector 13 such as an inductosyn for example is mounted on a moving part of the machine tool which will ultimately be controlled, for example the moving part is a moving table 11, and detected positional information Q from the position detector 13 is negatively fed back to a position controller 15 of numerical control equipment and in the position controller is delivered via an A—D converter 17 to an adder 19, wherein commanded positional information P and the detected positional information Q are compared to obtain a position error variable R. The position error variable R is applied via a position loop gain setting circuit 21 and a D-A converter 23 to a velocity amplifier 25 to cause the amplifier 25 to drive a motor 27 so that the position error variable R is reduced to zero, driving a reduction gear 29 and a ball screw 31 to provide position control of the moving table 11.

In a semi-closed loop system, the position of the moving part to be ultimately controlled is not detected directly, but rather its position is indirectly detected, for example, in terms of the rotational angle of a motor shaft which is detected by a resolver or like detector 33. Positional information is negatively fed back back and the system operates to cause the detected positional information to coincide with commanded positional information P.

In Figure 1 and 2 similar parts are given like reference numerals.

Figs. 3 and 4 of the accompanying drawings are schematic block diagrams which correspond respectively to Figures 1 and 2 and illustrate characteristics of the systems of Figures 1 and 2.

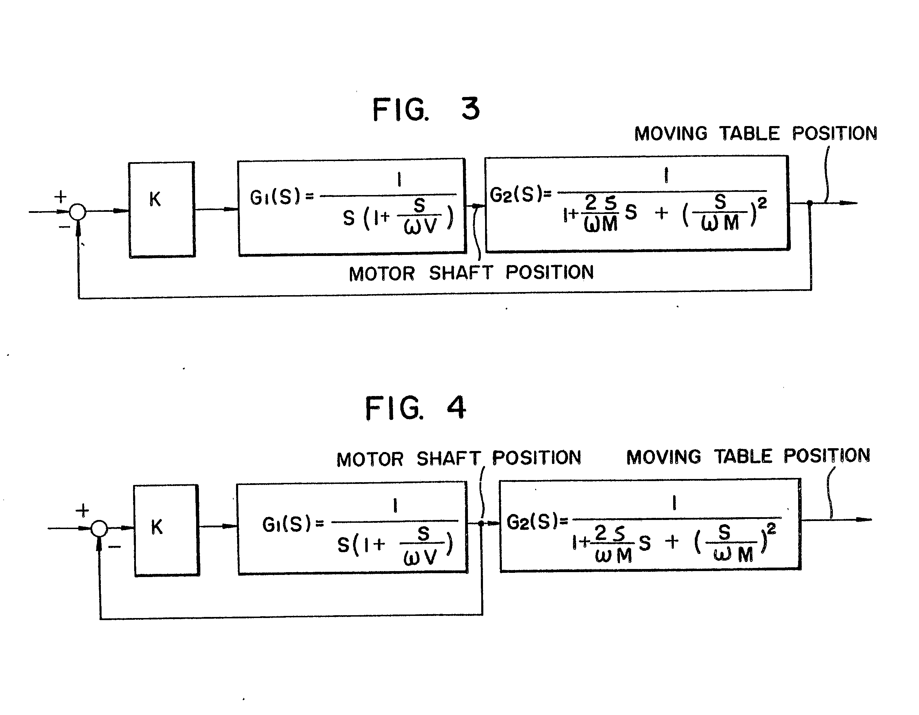

In Figures 3 and 4, K indicates a position loop gain; $G_1(s)$ designates a transfer function of a velocity controller including the response characteristics of the velocity amplifier 25 and motor 27 (s here and elsewhere is frequency, complex frequency); $G_2(s)$ identifies a transfer function of a mechanical system including the response characteristics of the reduction gear 29, ball screw 31 and moving table 11; $\omega_V$ and $\omega_M$ denote break angular frequencies of the velocity controller and the mechanical system, respectively; and $\zeta$ represents a damping factor. As will be seen from the block diagrams, the closed loop system includes mechanical elements in its closed loop and hence is capable of ultimately correcting pitch error and torsional error of the ball screw 31, permitting position control with higher accuracy than the semi-closed loop system. For this reason, closed loop systems have been widely used with boring lathes, milling machines and machining centers requiring high accuracy.

Regarding the block diagrams of Figures 3 and 4, a maximum value Kmax for the position loop gain K at which a closed loop system is stable and the movement of the moving table 11 does not become oscillatory is, in the case of the closed loop system, determined by the smaller of the break angular frequencies $\omega_V$ and $\omega_M$ of the transfer functions of the velocity controller and the mechanical system, as expressed by equation (1) below, whereas in the case of a semi-closed loop system, the maximum value Kmax is determined by the break angular frequency $\omega_V$ of the transfer function of the velocity controller, as expressed by the following equation (2).

$$Kmax=\frac{1}{n}\times Min\ (\omega_V,\ \omega_M) \qquad (1)$$

$$Kmax=\omega_V/n \qquad (2)$$

where $n$ is approximately equal to 5.

In the case of a closed loop system, if $\omega_M \gg \omega_V$, no problem occurs; but when $\omega_M < \omega_V$, the maximum value Kmax of the position loop gain can become smaller than that in a semi-closed system. Consequently, in those circumstances the closed loop system is inferior to the semi-closed loop system in terms of follow up error, acceleration-deceleration distance and servo rigidity.

In general, the break angular frequency $\omega_M$ of the transfer function of the mechanical system is given by

$$\omega_M=\sqrt{\frac{K_L}{J_L}} \qquad (3)$$

where $K_L$ is the rigidity of the mechanical system including the reduction gear and the ball screw and $J_L$ is a load inertia. Accordingly, in a case where the rigidity $K_L$ of the mechanical system is small and the load inertia $J_L$ is large, for example, in the case of a turntable of a large-sized machining center, the break angular frequency $f_M$ ($=\omega_M/2\pi$) of the transfer function of the mechanical system, for example, may sometimes be as low as 10 Hz or so, and the position loop gain K that can be achieved becomes small, thereby making stable and accurate position control difficult.

In a numerical-controlled machine tool having a closed loop control system, a nonlinear element of the mechanical system, for instance, backlash of a gear or nonlinear friction of a sliding surface enters into the closed loop, so that the movement of the moving table 11 is subject to the influence of such a nonlinear element.

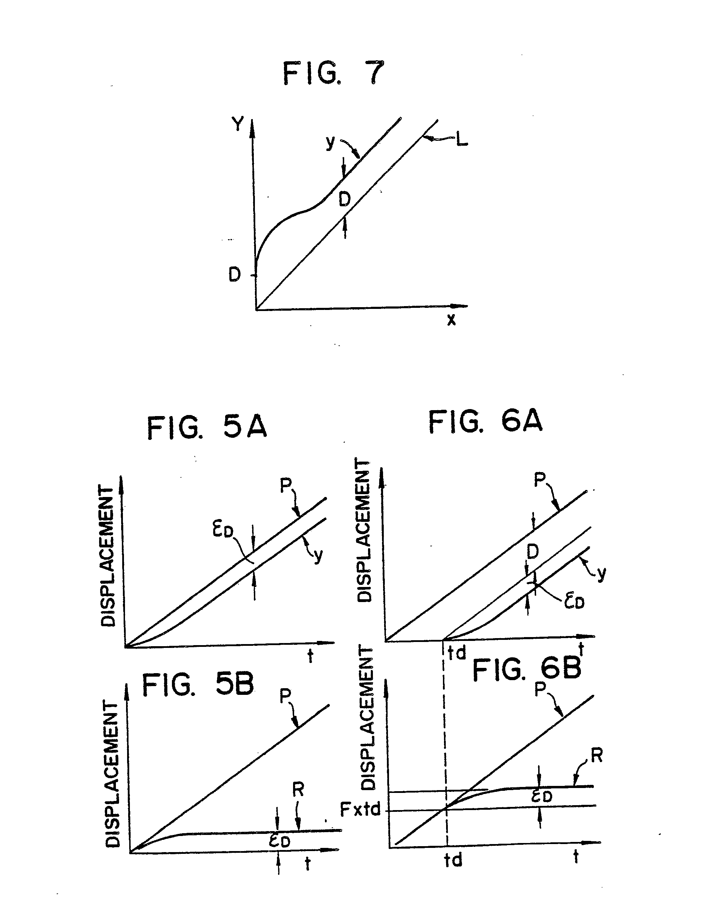

Figs. 5A, 5B, 6A and 6B of the accompanying drawings are graphs showing in terms of displacement or position versus time how the movement y of the moving table 11 and the position error variable R vary in dependence upon whether or not a nonlinear element, for example backlash having a magnitude D, occurs when applying, as the commanded positional information P, a ramp input having the following form:

$$P = F \times t \qquad (4)$$

where F is a feedrate and $t$ is time.

When no backlash occurs, the movement y of the moving table 11 follows up the input P with an error corresponding only to a steady velocity error variable $\varepsilon_D$ ($\varepsilon_D \alpha F/K$), as depicted, for example in Fig. 5A, and the position error variable R in such a case is as shown in Fig. 5B.

When backlash occurs, the movement y of the moving table 11 follows up the input P with an error corresponding to the magnitude D of the backlash in addition to the steady velocity error variable $\varepsilon_D$, as shown in Fig. 6A, and the position error variable R in this case is as depicted in Fig. 6B. In this way, when backlash occurs, follow-up error is increased as compared with a case in which no backlash occurs.

In continuous cutting control such as is adopted, for example, in an NC milling machine, NC lathe and so forth, when backlash acts on one of two simultaneously driven axes, for example, the X axis, with no backlash on the other, Y axis, even if the gain characteristics of both axes are linear and equal to each other, the movement y of the moving table 11 gets out of its commanded locus L to introduce a corresponding machining error, as shown in Fig. 7 of the accompanying drawings which is a graph showing movements along X and Y axes. Naturally, such a machining error can also be caused by nonlinear elements other than backlash.

GB—A—1,436,758 discloses an adaptive regulator of effecting closed loop control of processes whose dynamic parameters vary for example in an unforeseen or unknown way. Continuous and complex modelling of a process (which may be any of a very general range of mentioned processes) is prescribed.

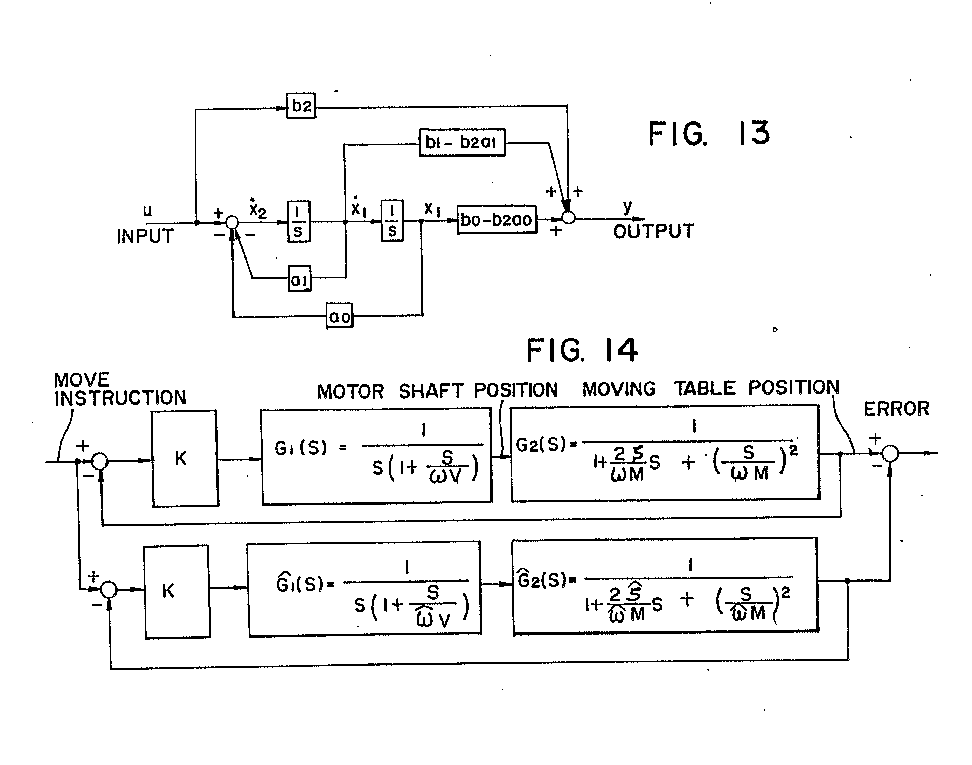

British Standard B.S. 1523:Part 1: 1967: page 35, Figure 13 discloses a displacement control system with divided monitoring feedback. In the control system a first, closed, feedback loop is established together with a second, semi-closed, feedback loop.

As described above, a previously proposed closed loop type position control system for a numerical-controlled machine tool has a defect in that machining error can be produced by non-linear elements in the mechanical system under control; furthermore, when the resonance frequency of the mechanical system, that is, the break angular frequency $f_M$ of the transfer function of the mechanical system is limited, the magnitude of the position loop gain that can be achieved within the stable region of the position control system is limited; which can result in a severe limitation on position control accuracy and stability.

The present invention is concerned with closed-loop type numerical-controlled machine tools.

The present invention is concerned to overcome the problem of non-linear response of mechanical systems caused for example by backlash.

According to the present invention, there is provided a closed loop type numerical-controlled machine tool having a position control system in which position control of a mechanical moving part of the tool is effected in dependence upon a position error variable obtained by making a comparison between commanded positional information and detected positional information from a position detector of the tool mounted on the mechanical moving part, characterised by a compensator, comprising a processor, provided in the closed loop, for reducing positioning errors arising because of non-linear responses resulting from the inclusion of the mechanical moving part in the closed loop, which compensator takes into account at least the transfer function of the closed loop without such non-linear responses, and has a compensation characteristic dependent upon the transfer function of the closed loop without the compensator but including the mechanical moving part, and wherein the compensator is so arranged as to modify said transfer function of the closed loop so as to provide for increased position loop gain obtainable in a stable region of the closed loop.

an embodiment of this invention can provide a position control system in a closed loop type numerical-controlled machine tool which permits position control with high accuracy.

An embodiment of this invention can provide a position control system in a closed loop type numerical-controlled machine tool which is adapted so that even in a case in which detected positional information is fed back from a moving table, a large position loop gain can be obtained to ensure highly accurate position control and high-speed positioning operation.

An embodiment of this invention can provide a position control system in a closed loop-type numerical-controlled machine tool which reduces machining errors due to nonlinear elements of the mechanical system, thereby to provide for enhanced accuracy in machining operation.

Briefly stated, in a closed loop type numerical-controlled machine tool embodying this invention in which position control of a mechanical moving part is performed in accordance with a position error variable obtained by making a comparison between commanded positional information and detected positional information from a position detector mounted on the mechanical moving part, deterioration in performance of the position control operation resulting from the inclusion of the mechanical moving part in the closed loop of the position control system, is mitigated by a compensator built into the numerical-controlled machine tool control system. The compensator is a position control error compensator which is equipped with an operating function of a processor and takes into account the characteristic response of the mechanical system of the machine tool including the mechanical moving part.

Reference is made, by way of example, to the accompanying drawings, in which:—

Figs. 1 and 2 are, as mentioned above, schematic block diagrams showing types of previously proposed position control systems for numerical-controlled machine tools;

Figs. 3 and 4 are, as mentioned above, schematic block diagrams which correspond respectively to Figs. 1 and 2 and illustrate characteristics of the systems of Figures 1 and 2;

Figs. 5A to 7 are graphs, as mentioned above, explanatory of the operations of previously proposed position control systems;

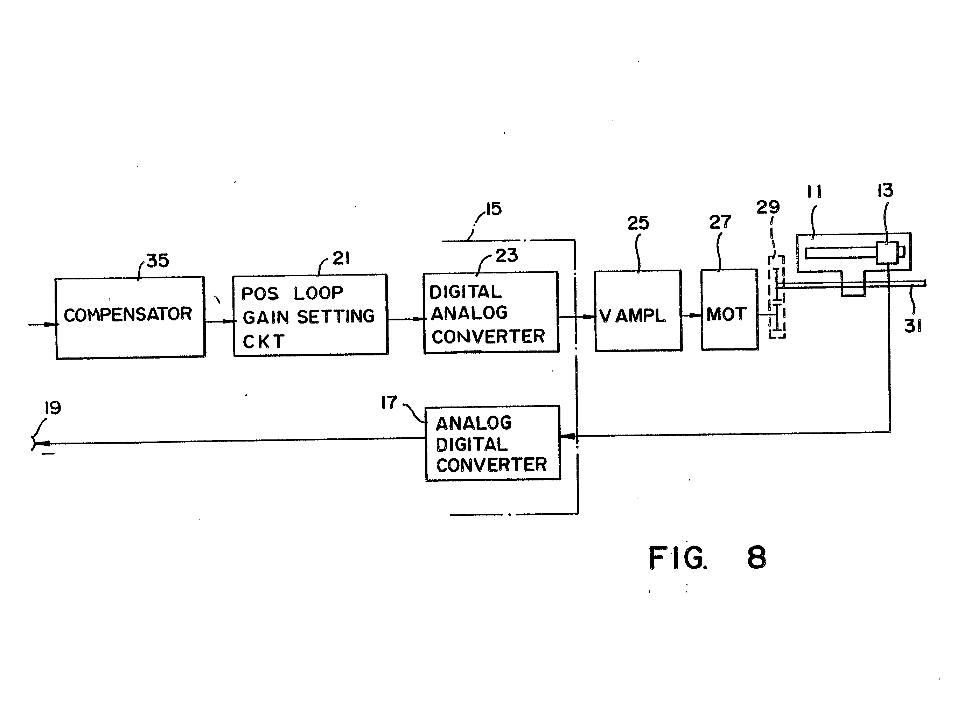

Fig. 8 is a schematic block diagram illustrating, by way of example, a numerical-controlled machine tool having a position control system in accordance with an embodiment of this invention;

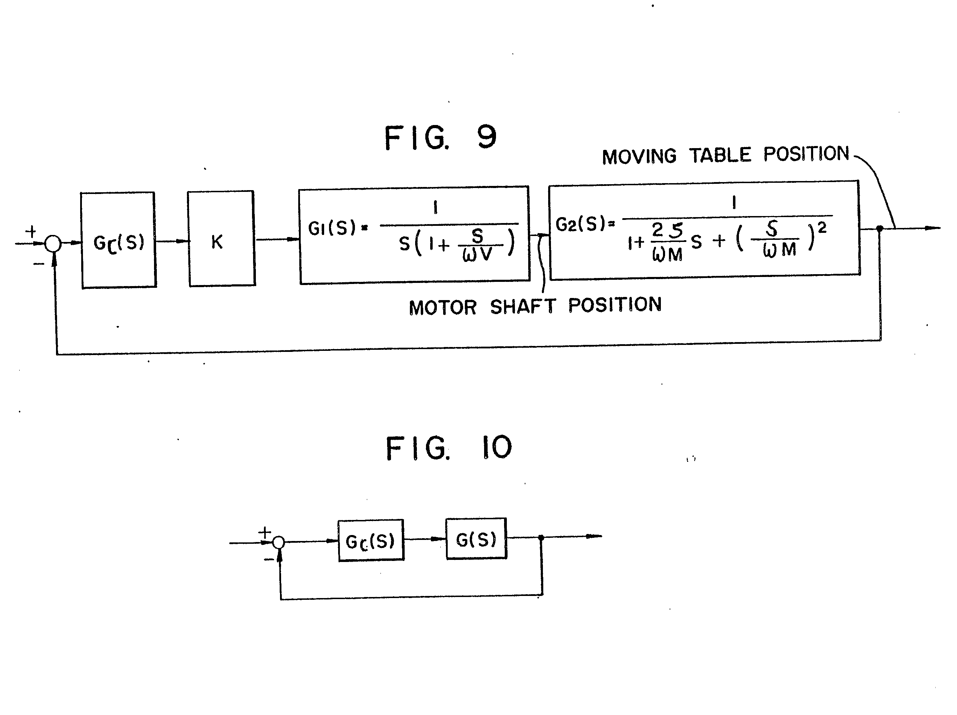

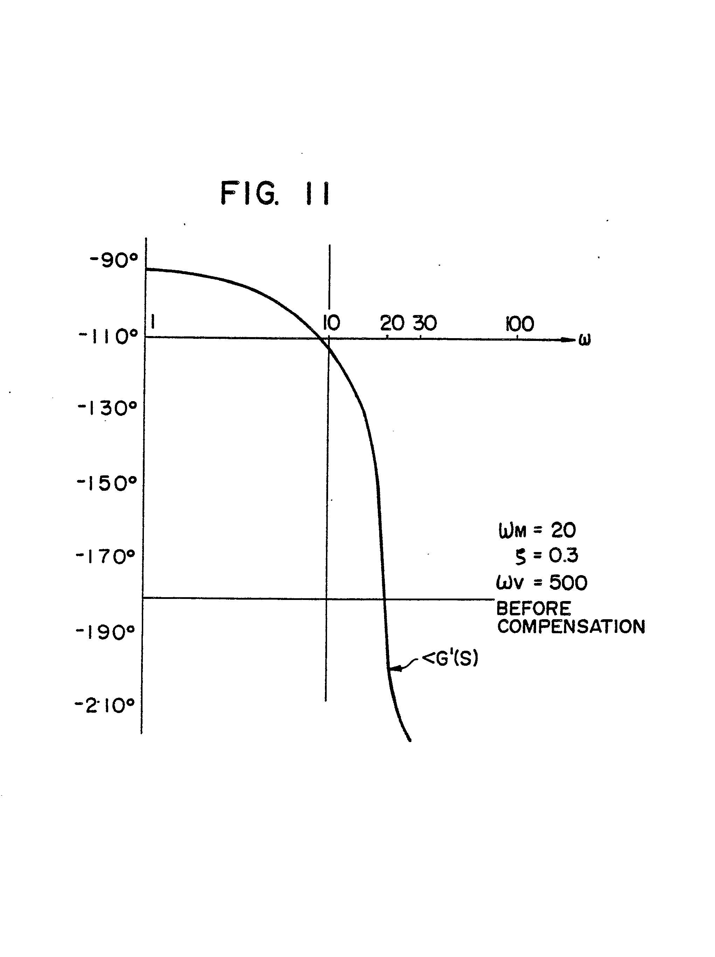

Figs. 9 and 10 are schematic block diagrams illustrating characteristics of the system of Figure 8;

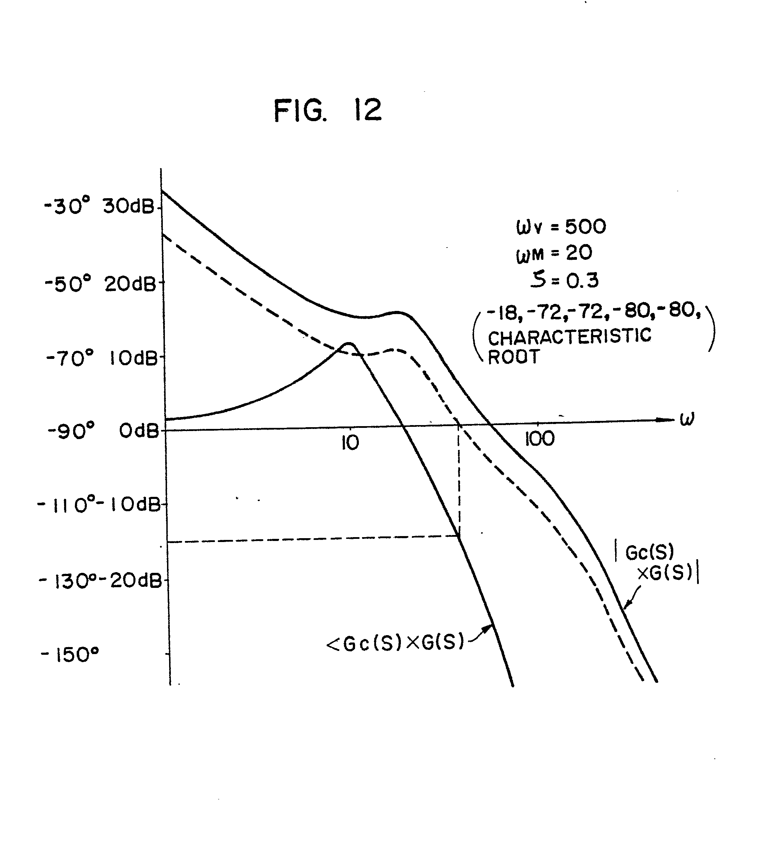

Figs. 11 and 12 are graphs illustrating characteristics for assistance in explanation of a position control system as shown in Fig. 8;

Fig. 13 is a schematic block diagram illustrating a position control error compensator for use in an embodiment of this invention;

Fig. 14 is a schematic block diagram explanatory of a control characteristic detecting system for use in an embodiment of this invention;

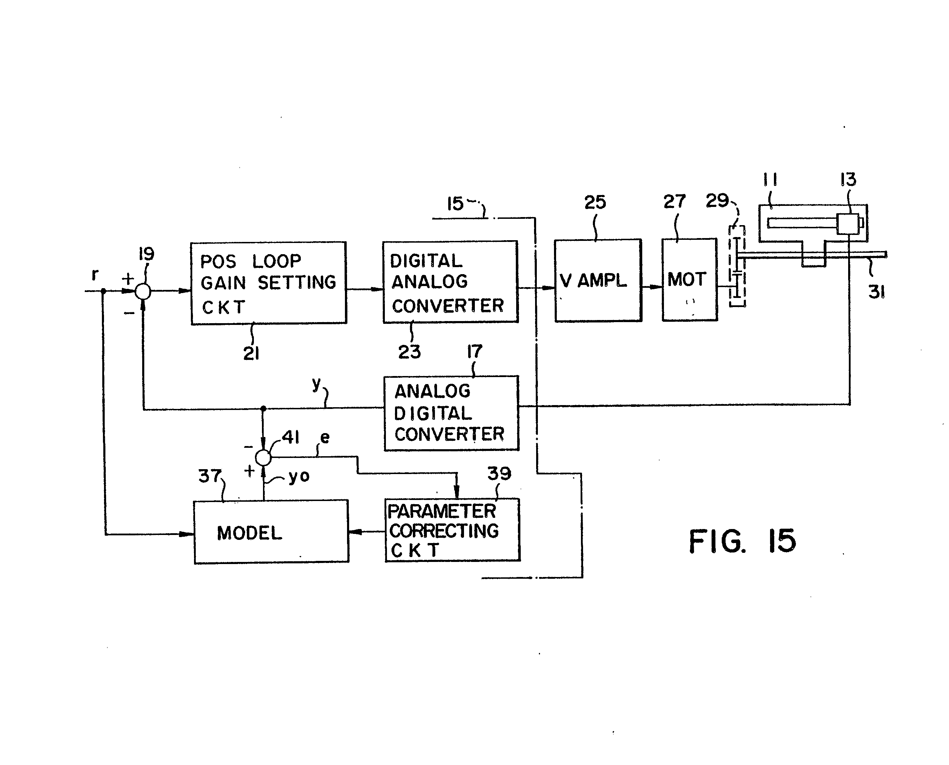

Fig. 15 is a block diagram illustrating equipment providing the control characteristic detecting system depicted in Fig. 14;

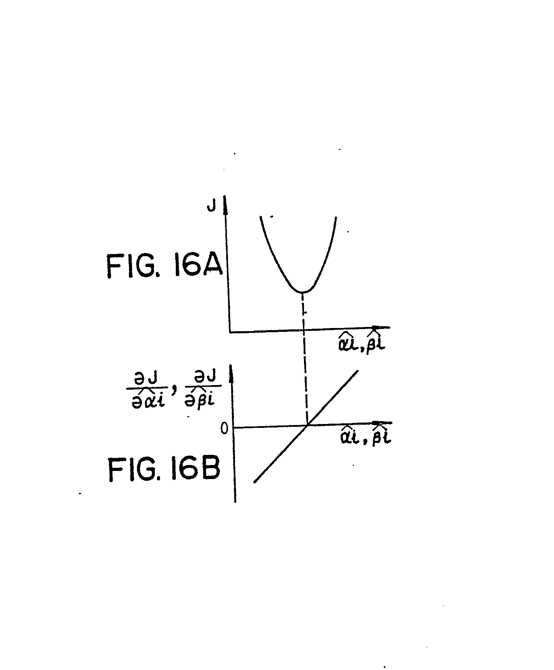

Figs. 16A and 16B are graphs for assistance in explanation of the operation of the equipment depicted in Fig. 15;

In Fig. 8 there is illustrated, by way of example, a numerical-controlled machine tool to which the present invention is applied.

Parts similar to those shown in Fig. 1 are given like reference numerals in Figure 8.

In Figure 8, 35 is a position control error compensator.

Fig. 9 shows in schematic block form characteristics of the arrangement of Fig. 8. $G_C(s)$ indicates the transfer function of the compensator 35; K designates position loop gain; and $G_1(s)$ and $G_2(s)$ are transfer functions of the velocity controller and the mechanical system, respectively.

In the embodiment of the present invention shown in Figure 8, the compensator 35 is provided in the closed loop position control system for stabilizing the system. Now, assuming that

$$G(s)=K \times G_1(s) \times G_2(s) \qquad (5)$$

then the block diagram of Fig. 9 is equivalent to that of Fig. 10, and the operation of the system is determined by the following composite transfer function:

$$H(s)=G_C(s) \times G(s) \qquad (6)$$

Therefore, the maximum value Kmax that can be taken by the position loop gain K without the movement of the moving table 11 becoming oscillatory is given by the break angular frequency $\omega_O$ of the composite transfer function H(s) as follows:

$$Kmax=\omega_O/n \qquad (7)$$

where $n$ is approximately equal to 5. Accordingly, by constituting the composite transfer function H(s) in such a manner that the break angular frequency $\omega_O$ is large, the maximum value Kmax can be selected to be large, thus enhancing the accuracy and stability of position control. In the embodiment of the present invention of Figure 8, the compensator 35 is so formed as to achieve this end. Conventionally, the compensator could provide phase lag compensation and phase lead compensation. In phase lag compensation, phase lag in a low-frequency region may exceed $-180°$ in some cases, leading to the defect in that when a nonlinear element is included in the closed loop, the system may sometimes become unstable. In phase lead compensation, a pole of the transfer function G(s) is to be cancelled by a root of the characteristic of a phase lead element, but in general, the pole is not preknown and invariable, so that the characteristic in the neighborhood of the pole of the transfer function G(s) cannot be sufficiently compensated. In the embodiment of the present invention of Figure 8, the provision of transfer function H(s) with a large break angular frequency $\omega_O$ is achieved by using, instead of such a simple-structured compensator, an advanced compensator utilizing operating functions of a processor in the numerical control equipment. A detailed description will hereinafter be given of the construction of the compensator 35 in the present embodiment.

In the case of a mechanical system in which the break angular frequency $\omega_M$ of its transfer function is 20 rad/s and the damping factor $\zeta$ is 0.3, if a transistor servo is employed in the velocity controller, the break angular frequency $\omega_V$ of the transfer function of the velocity controller can be made, for example, about 500 rad/s; therefore, it can be considered that $\omega_M \ll \omega_V$, and the transfer function G(s) can be approximated as follows, ignoring the angular frequency $\omega_V$:

$$G'(s)=\frac{K}{s} \times \frac{1}{1+\frac{2\zeta}{\omega_M}s+\frac{s^2}{\omega_M}} \qquad (8)$$

In a case in which no compensation is effected, the phase characteristic of the transfer function G'(s) is such as is shown in the graph of Fig. 11. If a phase margin of more than 60° is to be secured, the maximum value Kmax of the position loop gain K which can be achieved is less than 10 rad/sec.

Generally, it is known as the dynamic compensation of J. B. Pearson that the characteristic root of the transfer function $G_c(s) \times G'(s)$ of the compensated system can be designated at will if a second-order transfer function $G_c(s)$ as given by the following equation is formed in relation to a third-order transfer function G'(s).

$$G_c(s) = \frac{b_2 s^2 + b_1 s + b_0}{s^2 + a_1 s + a_0} \qquad (9)$$

Then, when the second-order transfer function $G_c(s)$ is introduced, the compensated system will

$$G_c(s) \times G(s) = \frac{b_2 s^2 + b_1 s + b_0}{s^2 + a_1 s + a_0} \times \frac{K}{s\left(1 + \dfrac{s}{\omega_V}\right)} \times \frac{1}{1 + \dfrac{2\zeta}{\omega_M}s + \left(\dfrac{s}{\omega_M}\right)^2} \qquad (11)$$

For instance, when the compensator is formed with the characteristic root $\omega_0$ selected to be 18 rad/sec, the gain and phase of the transfer function $G_c(s) \times G(s)$ of the compensated system are such, for example, as shown in the Bode diagram of Fig. 12. In Fig. 12, a steady gain is at about 40 rad/sec, but when the gain is adjusted as indicated by the broken line so that the phase margin is about 60°, the feasible position loop gain is at about 20 rad/sec, which is larger than the gain before compensation; thus, a stable operation can be expected. When a larger loop gain is required, the compensator is designed with the value of the characteristic root $\omega_0$ in the equation (10) selected larger than 18 rad/sec, for example, 30 rad/sec and with the characteristic roots after compensation set to $-\omega_0$, $-4\omega_0$, $-4\omega_0$, $-8\omega_M$, $-8\omega_M$.

Once the coefficients of the compensator 35 are thus determined, the compensator 35 can be implemented using the operating function of a processor in the following manner.

By manipulation of equation (9), it follows that

$$G_c(s) = b_2 + \frac{(b_1 - b_2 a_1)s + (b_0 - b_2 a_0)}{s^2 + a_1 s + a_0} \qquad (12)$$

Generally, the state equation of the least order of a system having such a transfer function can be expressed, for example, by the following differential equations, and a circuit arrangement

have a fifth-order transfer function $G_c(s) \times G'(s)$; consequently, if the characteristic roots of this fifth-order transfer function are selected to be, for example, $-\omega_0$, $-4\omega_0$, $-4\omega_0$, $-4\omega_M$, $-4\omega_M$ so that the system is stable, its characteristic equation can be expressed as follows:

$$1 + G_c(s) \times G'(s) = (s + \omega_0)(s + 4\omega_0)^2 (s + 4\omega_M)^2 \qquad (10)$$

From equation (10), the coefficients $a_0$, $a_1$, $b_0$, $b_1$ and $b_2$ of the transfer function $G_c(s)$ in equation (9) can be determined by a simple algebraic equation, so that the transfer function $G_c(s)$ of the compensator 35 can be determined completely, and the composite transfer function $H(s) = G_c(s) \times G(s)$ after compensation is given by the following equation:

for implementing such a case is as shown in Fig. 13.

$$x = \begin{bmatrix} 0 & 1 \\ -a_0 & -a_1 \end{bmatrix} x + \begin{bmatrix} 0 \\ 1 \end{bmatrix} u$$

$$y = \begin{bmatrix} b_0 & -b_2 a_0 \\ b_1 & -b_2 a_1 \end{bmatrix} x + b_2 u \qquad (13)$$

where

$$\dot{x} = \frac{d}{dt}x, \qquad x = \begin{bmatrix} x_1 \\ x_2 \end{bmatrix},$$

and $x_1$ and $x_2$ being state variables.

Since equations (13) represent a continuous system, they can be transformed into the following difference equations in actual processing of the processor.

$$x(k+1) = \phi(T) \cdot x(k) + h(T)u(k)$$

$$y(k+1) = \begin{bmatrix} b_0 & -b_2 a_0 \\ b_1 & -b_2 a_1 \end{bmatrix} \cdot x(k+1) + b_2 u(k+1) \qquad (14)$$

where $\phi(T)$ and $h(T)$ are functions including $a_0$, $a_1$, $b_0$, $b_1$ and $b_2$.

Thus, deriving from the input $u(k)$ the state

variables $x_1(k)$ and $x_2(k)$ in Fig. 13 by matrix calculation, the output $y(k)$ can be obtained using such values, so that if this processing is performed by a processor on an on-line basis simultaneously with machining control, the compensator 35 is obtained.

As described above, according to the present embodiment of this invention, in a numerical-controlled machine tool having a closed loop control system in which positional information is fed back directly from a mechanical moving part, there is provided in the closed loop a compensator which is formed taking into account the characteristic of the mechanical system including the mechanical moving part, through utilization of the operating function of a processor. The closed loop is stabilized by the compensator to perform position control of the mechanical moving part. Since a large position loop gain is available, position control can be achieved with high accuracy and positioning operations can be effected at high speed.

As will be appreciated from the above, the transfer function of the mechanical system must be preknown in order to design the compensator 35 in the embodiment of Figure 8. The transfer function of the mechanical system can be obtained by the employment of a servo analyzer; but, for example, as shown in Fig. 14, by providing in parallel with an actual system a model system having a transfer function of the same type as that of an actual system and performing a simulation such that the output from the model system may become equal to that from the actual system, the transfer function of the mechanical system can easily be modelled if the resonance angular frequencies $\hat{\omega}_V$ and $\hat{\omega}_M$ and the damping factor $\hat{\zeta}$ of the model are varied. A description will be given of a characteristic detecting system utilizing this method.

Fig. 15 shows the arrangement of principal parts of an example of a numerical-controlled machine tool control system employing such a characteristic detecting system.

In Fig. 15, parts corresponding to those in Fig. 1 are identified by the same reference numerals. 37 is a model system; 39 is a parameter correcting circuit; and 41 is an adder.

In the numerical-controlled machine tool having a closed loop control system in which detected positional information from mechanical moving part 11 is negatively fed back, model arrangement 37 for simulating the characteristic of the control system, that is the transfer function of the closed loop, and parameter correcting circuit 39 for correcting parameters of the model arrangement 37 are provided in the position controller 15 by utilization of a processor. Commanded positional information is applied both to the actual control system and to the model system 37, and the parameters of the model system 37 are corrected by the parameter correcting circuit 39 in such a manner as to minimize the difference between the outputs from the actual control system and the model system 37; and the characteristic of the model system 37 in a state such that the output difference is a minimum is taken to be the characteristic of the actual control system.

In general, the transfer function of a closed loop control system in a numerical-controlled machine tool is seldom unknown, and in many cases, the order of the transfer function can be assumed and can generally be expressed by a third-order pulse transfer function G(Z) such as is given by the following equation which is suitable for actual processing by a processor.

$$G(Z) = \frac{\beta_2 z^{-2} + \beta_1 z^{-1} + \beta_0}{z^{-3} + \alpha_2 z^{-2} + \alpha_1 z^{-1} + \alpha_0} \qquad (15)$$

where $\alpha_i$ and $\beta_i$ (i=0, 1, 2) are constants inherent in the closed loop. Of course, when it is necessary to approximate the function with a pulse transfer function of a higher order, a higher-order pulse transfer function must be assumed initially for modelling, but for convenience of explanation, it will be assumed herein that the characteristic response of the closed loop can be expressed by the pulse transfer function of equation (15).

As a model system 37 for modelling such a transfer function G(Z), a model system which has a transfer function of the same order as the transfer function G(Z) and having unknown parameters $\hat{\alpha}_0$, $\hat{\alpha}_1$, $\hat{\alpha}_2$, $\hat{\beta}_0$, $\hat{\beta}_1$ and $\hat{\beta}_2$ as given by the following equation, is obtained by the employment of a processor.

$$G(Z; \hat{\alpha}_i; \hat{\beta}_i) = \frac{\hat{\beta}_2 Z^{-2} + \hat{\beta}_1 Z^{-1} + \hat{\beta}_0}{Z^{-3} + \hat{\alpha}_2 Z^{-2} + \hat{\alpha}_1 Z^{-1} + \hat{\alpha}_0} \qquad (16)$$

When supplied with the same input $r$ as that applied to the actual control system, the model system 37 provides an output $y_0$ which is given by the following equation:

$$y_0(n) = \hat{\beta}_2 r(n-1) + \hat{\beta}_1 r(n-2) + \hat{\beta}_0 r(n-3)$$

$$-\hat{\alpha}_2 y_0(n-1) - \hat{\alpha}_1 y_0(n-2) - \hat{\alpha}_0 y_0(n-3)$$

$$(17)$$

Accordingly, the output $y_0$ of the model system 37 and the output $y$ of the actual control system obtained with the position detector 13 are delivered to the adder 41 to detect the difference $e$ therebetween, which difference $e$ is applied to the parameter correcting circuit 39.

The parameter correcting circuit 39 serves to correct the parameters $\hat{\alpha}_i$ and $\hat{\beta}_i$ (i=0, 1, 2) of the model system 37 in a manner such as to minimize the output difference $e$, as described previously, and for such correction, a performance criterion J such, for example, as given by the following equation is introduced, whereby the parameters $\hat{\alpha}_i$ and $\hat{\beta}_i$ are evaluated.

$$J(\hat{\alpha}_i, \hat{\beta}_i)=\Sigma\{e(k)\}^2=\Sigma y_o(k)-y(k)\}^2$$

$$=\Sigma\{\hat{\beta}_2 r(k-1)+\hat{\beta}_1 r(k-2)+\hat{\beta}_o r(k-3)-\hat{\alpha}_2 y_o(k-1)$$

$$-\hat{\alpha}_1 y_o(k-2)-\hat{\alpha}_o y_o(k-3)-y(k)\}^2 \qquad (18)$$

That is, the performance criterion $J(\hat{\alpha}_i, \hat{\beta}_i)$ has a characteristic curve such as is shown in Fig. 16A which projects downwardly with respect to the parameters $\hat{\alpha}_i$ and $\hat{\beta}_i$, and its partial differential coefficients $\partial J/\partial\hat{\alpha}_i$ and $\partial J/\partial\hat{\beta}_i$ become as depicted in Fig. 16B. Accordingly, by changing the parameters $\hat{\alpha}_i$ and $\hat{\beta}_i$ so that $\partial J/\partial\hat{\alpha}_i$ and $\partial J/\partial\hat{\beta}_i$ are reduced to zero, in accordance with the following relationships:

$$\Delta\hat{\alpha}_i=-K'\times\frac{\partial J}{\partial\hat{\alpha}_i} \qquad (19)$$

$$\Delta\hat{\beta}_i=-K''\times\frac{\partial J}{\partial\hat{\beta}_i} \qquad (20)$$

the values of the parameters $\hat{\alpha}_i$ and $\hat{\beta}_i$ such that the performance criterion $J$ is minimized can easily be obtained; thus, a model system 37 that minimizes the performance criterion $J$ can be determined. The transfer function of the model system 37 thus determined is used as an optimum assumed model value of the transfer function of the actual closed loop.

In this way, a model system 37 for simulating the transfer function of the closed loop and the parameter correcting circuit 39 for correcting the parameters of the model circuit 37 are constituted through utilization of the operating function of a process; the parameters of the model system 37 are corrected by the parameter correcting circuit 39 so that the output $y_o$ of the model system 37 may be approximately equal to the output $y$ of the actual control system; and the final value derived from model system 37 is used as an assumed value of the transfer function of the actual control system. As the process for effecting the modelling, use can be made of a process which performs, for example, ordinary machining control; hence, the transfer function can be obtained economically. Furthermore, this method does not require any measuring equipment such as a servo analyzer which are required by prior proposals and, in addition, does not involve troublesome operations for obtaining the transfer function, so that this method can readily be carried into practice in the course of the position control.

For the evaluation of the parameters $\hat{\alpha}_i$ and $\hat{\beta}_i$ of the model system 37, use can also be made of a trial and error method, rather than the above-described method.

## Claims

1. A closed loop type numerical-controlled machine tool having a position control system in which position control of a mechanical moving part (11) of the tool is effected in dependence upon a position error variable (R) obtained by making a comparison between commanded positional information (P) and detected positiona information (Q; y-Fig. 13) from a position detector (13) of the tool mounted on the mechanical moving part (11), characterised by a compensator (35), comprising a processor, provided in the closed loop (19, 21, 23, 25, 27, 29, 31, 11, 13, 17), for reducing positioning errors arising because of non-linear responses resulting from the inclusion of the mechanical moving part (11) in the closed loop, which compensator (35) takes into account at least the transfer function of the closed loop without such non-linear responses, and has a compensation characteristic dependent upon the transfer function of the closed loop without the compensator (35) but including the mechanical moving part (11), and wherein the compensator (35) is so arranged as to modify said transfer function of the closed loop so as to provide for increased position loop gain (K) obtainable in a stable region of the closed loop.

2. A machine tool as claimed in claim 1, wherein the closed loop includes:—

an adder (19) having as an input the commanded positional information (P),

a gain setting circuit (21), connected to said adder (19),

a velocity amplifier (25) connected to said gain setting circuit (21),

a motor (27) connected to said velocity amplifier (25),

mechanical linkage (29, 31) connecting said motor (27) to said moving part (11),

said moving part (11), and said position detector (13) mounted to detect the position of said moving part (11).

said adder being operable to provide as an output a difference (R) between said commanded positional information (P) and said detected positional information (Q; y).

3. A machine tool as claimed in claim 1 or 2, wherein the compensator (35) has a compensation characteristic dependent upon the said transfer function of the closed loop as represented by the characteristic of a model system (37) providing an approximation of the said transfer function and having parameters as corrected by a parameter correcting circuit (39) operable so as to minimize difference between an output (yo) of the model system (37) and detected positional information (y-Fig. 15) derived from the closed loop without the compensator (35).

4. A machine tool as claimed in claim 2, wherein said compensator is connected between said adder (19) and said gain setting circuit (21), and is operable to provide an increased break angular frequency for the closed loop including the mechanical moving part, as compared with the break angular frequency of the closed loop without the compensator (35), by varying an input to said gain setting circuit in correspondence with said output of said adder.

5. A machine tool as claimed in claim 4, wherein $\omega_M \ll \omega_V$, where $\omega_M$ is the break angular frequency of the transfer function of said mechanical linkage and said moving part, and $\omega_V$ is the break angular frequency of the transfer function of the combination of the velocity amplifier (25) and the motor (27), wherein the transfer function $(G'(s))$ of the closed loop without said compensator (35) can be approximated by a third order transfer function, and wherein the transfer function $(G_c(s))$ of said compensator (35) can be represented by a second order function.

6. A machine tool as claimed in claim 5 wherein the roots of the characteristic equation of said closed loop including said compensator are selected as $-\omega_o$, $-4\omega_o$, $-4\omega_o$, $-4\omega_M$, $-4\omega_M$ where $\omega_o$ is the break angular frequency of the portion of the closed loop including at least the compensator, the velocity amplifier, the motor and the mechanical linkage.

7. A machine tool as claimed in claim 5, wherein the roots of the characteristic equation of said closed loop including said compensator are selected as $-\omega_o$, $-4\omega_o$, $-4\omega_o$, $-8\omega_M$, $-8\omega_M$, where $\omega_o$ is the break angular frequency of the portion of the closed loop including at least the compensator, the velocity amplifier, the motor and the mechanical linkage.

**Patentansprüche**

1. Vorrichtung zur Lageregelung numerisch gesteuerter Werkzeugmaschinen, mit einem Regelkreis und mit einem Positionssteuersystem, in dem eine Positionssteuerung eines mechanisch beweglichen Teils (11) des Werkzeugs in Abhängigkeit von einer Positionsfehlervariablen (R) bewirkt wird, die durch Durchführung eines Vergleichs zwischen einer Information über die befohlene Position (P) und einer Information über die erfaßte Positiom (Q; y-Fig. 13) aus einem Positionsdetektor (13) des Werkeugs, das auf dem mechanisch beweglichen Teil (11) montiert ist, gewonnen wird, gekennzeichnet durch einen Kompensator (35), der einen Prozessor enthält, welcher in dem Regelkreis (19, 21, 23, 25, 27, 29, 31, 11, 13, 17) zur Verminderung von Positionierungsfehlern, die aufgrund nichtlinearer Ansprechverhaltensweisen auftreten, die aus der Einbeziehung des mechanisch beweglichen Teils (11) in den Regelkreis resultieren, vorgesehen ist, welcher Kompensator (35) zumindest die Übertragungsfunktion des Regelkreises ohne derartige nichtlineare Ansprechverhaltensweisen in Betracht zieht und eine Kompensations-Charakteristik abhängig von der Übertragungsfunktion des Regelkreises ohne den Kompensator (35), jedoch mit dem darin enthaltenen mechanisch beweglichen Teil (11) hat, und wobei der Kompensator (35) derart angeordnet ist, daß er die Übertragungsfunktion des Regelkreises modifizieren kann, um so einen erhöhten Positionsübertragungsfaktor (K) zu erzeugen, der in einem stabilen Bereich des Regelkreises erzielbar ist.

2. Werkzeugmaschine nach Anspruch 1, wobei der Regelkreis folgende Elemente enthält:
einen Addierer (19), dessen Eingangssignal die Information über die befohlene Position (P) ist,
eine Übertragungsfaktor-Einstellschaltung (21), die mit dem Addierer (19) verbunden ist,
einen Geschwindigkeitsverstärker (25), der mit der Übertragungsfaktor-Einstellschaltung (21) verbunden ist,
einen Motor (27), der mit dem Geschwindigkeitsverstärker (25) verbunden ist,
eine mechanische Gelenkverbindung (29, 31), die den Motor (27) mit dem beweglichen Teil (11) verbindet,
wobei das bewegliche Teil (11) und der Positionsdetektor (13) so angebracht sind, daß die Position des beweglichen Teils (11) erfaßt wird,
und wobei der Addierer betreibbar ist, um als ein Ausgangssignal eine Differenz (R) zwischen der Information über die befohlene Position (P) und der Information über die erfaßte Position (Q; y) zu erzeugen.

3. Werkzeugmaschine nach Anspruch 1 oder 2, dadurch gekennzeichnet, daß der Kompensator (35) eine Kompensations-Charakteristik abhängig von der Übertragungsfunktion des Regelkreises hat, wie sie durch die Charakteristik eines Modellsystems (37) repräsentiert wird, welches eine Annäherung der Übertragungsfunktion erreicht und Parameter hat, die durch eine Parameterkorrekturschaltung (39) korrigiert werden, welche so betreibbar ist, daß sie die Differenz zwischen einem Ausgangssignal (yo) des Modellsystems (37) und der Information über die erfaßte Position (y-Fig. 15), die aus dem Regelkreis ohne den Kompensator (35) gewonnen wird, minimiert.

4. Werkzeugmaschine nach Anspruch 2, dadurch gekennzeichnet, daß der Kompensator zwischen den Addierer (19) und die Übertragungsfaktor-Einstellschaltung (21) geschaltet ist und betreibbar ist, um die erhöhte Kennlinienwinkelfrequenz für den Regelkreis, der das mechanisch bewegliche Teil enthält, im Vergleich mit der Kennlinienwinkelfrequenz des Regelkreises ohne den Kompensator (35) durch Variieren eines Eingangssignals für die Übertragungsfaktor-Einstellschaltung in Übereinstimmung mit dem Ausganssignal des Addierers zu erzeugen.

5. Werkzeugmaschine nach Anspruch 4, dadurch gekennzeichnet, daß $\omega_M \ll \omega_V$ ist, wobei $\omega_M$ die Kennlinienwinkelfrequenz der Übertragungsfunktion der mechanischen Gelenkverbindung und des beweglichen Teils und $\omega_V$ die Kennlinienwinkelfrequenz der Übertragungsfunktion der Kombination aus dem Geschwindigkeitsverstärker (25) und dem Motor (27) ist, wobei die Übertrangungsfunktion $(G'(s))$ des Regelkreises ohne den Kompensator (35) durch eine Übertrangungsfunktion dritter Ordnung angenähert erreicht werden kann und wobei die Übertragungsfunktion $(G_c(s))$ des Kompensators (35) durch eine Funktion zweiter Ordnung ausgedrückt werden kann.

6. Werkzeugmaschine nach Anspruch 5, dadurch gekennzeichnet, daß die Wurzeln der charakteristischen Gleichung des Regelkreises, der den Kompensator enthält, zu $-\omega_0$, $-4\omega_0$, $-4\omega_0$, $-4\omega_M$, $-4\omega_M$ ausgewählt sind, wobei $\omega_0$ die Kennlinienwinkelfrequenz des Teils des Regelkreises ist, der zumindest den Kompensator, den Geschwindigkeitsverstärker, den Motor und die mechanische Gelenkverbindung enthält.

7. Werkzeugmaschine nach Anspruch 5, dadurch gekennzeichnet, daß die Wurzeln der charakteristischen Gleichung des Regelkreises, der den Kompensator enthält, zur $-\omega_0$, $-4\omega_0$, $-4\omega_0$, $-8\omega_M$, $-8\omega_M$ ausgewählt sind, wobei $\omega_0$ die Kennlinienwinkelfrequenz des Teils des Regelkreises ist, der zumindest den Kompensator, den Geschwindigkeitsverstärker, den Motor und die mechanische Gelenkverbindung enthält.

**Revendications**

1. Une machine-outil à commande numérique du type à boucle fermée comportant un système de commande de position dans lequel la commande de position d'un élément mécanique mobile (11) de l'outil est effectuée sous la dépendance d'une variable d'erreur de position (R) obtenue en effectuant une comparaison entre une information de position commandée (P) et une information position détectée (Q; y, figure 13) provenant d'un détecteur de position (13) de l'outil monté sur l'élément mécanique mobile (11), caractérisée par un compensateur (35) comprenant un processeur, incorporé dans la boucle fermée (19, 21, 23, 25, 27, 29, 31, 11, 13, 17), dans le but de réduire des erreurs de position qui apparaissent du fait de réponses non linéaires résultant de l'inclusion de l'élément mécanique mobile (11) dans la boucle fermée, ce compensateur (35) tenant compte au moins de la fonction de transfert de la boucle fermée en l'absence de telles réponses non linéaires, et ayant une caractéristique de compensation qui dépend de la fonction de transfert de la boucle fermée sans le compensateur (35) mais en comprenant l'élément mécanique mobile (11), et le compensateur (35) étant conçu de façon à modifier la fonction de transfert de la boucle fermée afin d'augmenter le gain de boucle de position (K) qu'on peut obtenir dans une région stable de la boucle fermée.

2. Une machine-outil selon la revendication 1, dans laquelle la boucle fermée comprend:

un additionneur (19) recevant en entrée l'information de position commandée (P),

un circuit de fixation de gain (21), connecté à cet additionneur (19),

un amplificateur de vitesse (25) connecté au circuit de fixation de gain (21),

un moteur (27) connecté à l'amplificateur de vitesse (25),

une liaison mécanique (29, 31) accouplant le moteur (27) à l'élément mobile (11),

cet élément mobile (11) et le détecteur de position (13) étant montés de façon à détecter la position de l'élément mobile (11),

l'additionneur pouvant fournir en tant que signal de sortie une différence (R) entre l'information de position commandée (P) et l'information de position détectée (Q; y).

3. Une machine-outil selon la revendication 1 ou 2, dans laquelle le compensateur (35) a une caractéristique de compensation qui dépend de la fonction de transfert de la boucle fermée, représentée par la caractéristique d'un système modèle (37) fournisssant une approximation de cette fonction de transfert et ayant des paramètres, corrigés par un circuit de correction de parametres (39), capables de minimiser la différence entre un signal de sortie (yo) du système modèle (37) et l'information de position détectée (y, figure 15) qui est obtenue à partir de la boucle fermée sans le compensateur (35).

4. Une machine-outil selon la revendication 2, dans laquelle le compensateur est connecté entre l'additionneur (19) et le circuit de fixation de gain (21), et on peut le faire fonctionner de façon à obtenir une pulsation de coupure accrue pour la boucle fermée comprenant l'élément mécanique mobile, par rapport à la pulsation de coupure de la boucle fermée sans le compensateur (35), en faisant varier un signal d'entrée appliqué au circuit de fixation de gain, en correspondance avec le signal de sortie de l'additionneur.

5. Une machine-outil selon la revendication 4, dans laquelle $\omega_M \ll \omega_V$, en désignant par $\omega_M$ la pulsation de coupure de la fonction de transfert de la liaison mécanique et de l'élément mobile, et par $\omega_V$ la pulsation de coupure de la fonction de transfert de la combinaison de l'amplificateur de vitesse (25) et du moteur (27), dans laquelle la fonction de transfert (G'(s)) de la boucle fermée sans le compensateur (35) peut être représentée de façon approchée par une fonction de transfert du troisième ordre, et dans laquelle la fonction de transfert (G$_c$(s)) du compensateur (35) peut être représentée par une fonction du second ordre.

6. Une machine-outil selon la revendication 5, dans laquelle on sélectionne pour les racines de l'équation caractéristique de la boucle fermée comprenant le compensateur les valeurs: $-\omega_0$, $-4\omega_0$, $-4\omega_0$, $-4\omega_M$, $-4\omega_M$, en désignant par $\omega_0$ la pulsation de coupure de la partie de la boucle fermée qui comprend au moins le compensateur, l'amplificateur de vitesse, le moteur et le liaison mécanique.

7. Une machine-outil selon la revendication 5, dans laquelle on sélectionne pour les racines de l'équation caractéristique de la boucle fermée comprenant le compensateur les valeurs: $-\omega_0$, $-4\omega_0$, $-4\omega_0$, $-8\omega_M$, $-8\omega_M$, en désignant par $\omega_0$ la pulsation de coupure de la partie de la boucle fermée que compend au moins le compensateur, l'amplificateur de vitesse, le moteur et la liaison mécanique.

FIG. 1

FIG. 2

## FIG. 3

MOVING TABLE POSITION

$$G_1(S) = \frac{1}{S\left(1 + \dfrac{S}{\omega V}\right)}$$

$$G_2(S) = \frac{1}{1 + \dfrac{2S}{\omega M}S + \left(\dfrac{S}{\omega M}\right)^2}$$

K

MOTOR SHAFT POSITION

## FIG. 4

MOTOR SHAFT POSITION        MOVING TABLE POSITION

K

$$G_1(S) = \frac{1}{S\left(1 + \dfrac{S}{\omega V}\right)}$$

$$G_2(S) = \frac{1}{1 + \dfrac{2S}{\omega M}S + \left(\dfrac{S}{\omega M}\right)^2}$$

# FIG. 7

# FIG. 5A

# FIG. 6A

# FIG. 5B

# FIG. 6B

FIG. 8

0 012 620

## FIG. 9

MOVING TABLE POSITION

$$G_1(S) = \frac{1}{S\left(1 + \frac{S}{\omega V}\right)}$$

$$G_2(S) = \frac{1}{1 + \frac{2S}{\omega M}S + \left(\frac{S}{\omega M}\right)^2}$$

MOTOR SHAFT POSITION

## FIG. 10

$G_c(S)$   $G(S)$

# FIG. II

$\omega_M = 20$

$\zeta = 0.3$

$\omega_V = 500$

BEFORE
COMPENSATION

$<G'(S)$

# FIG. 12

$\omega_v = 500$
$\omega_M = 20$
$\varsigma = 0.3$

$\left(\begin{array}{l}-18, -72, -72, -80, -80, \\ \text{CHARACTERISTIC} \\ \text{ROOT}\end{array}\right)$

$|Gc(S) \times G(S)|$

$<Gc(S) \times G(S)$

## FIG. 13

$$x_2 \quad \frac{1}{s} \quad \dot{x}_1 \quad \frac{1}{s} \quad x_1$$

b2

bl − b2al

bo−b2ao

al

ao

u
INPUT

y
OUTPUT

## FIG. 14

MOVE
INSTRUCTION

MOTOR SHAFT POSITION    MOVING TABLE POSITION

ERROR

K

$$G_1(S) = \frac{1}{s\left(1 + \frac{s}{\omega_V}\right)}$$

$$G_2(S) = \frac{1}{1 + \frac{2\zeta}{\omega_M}s + \left(\frac{s}{\omega_M}\right)^2}$$

K

$$\hat{G}_1(S) = \frac{1}{s\left(1 + \frac{s}{\hat{\omega}_V}\right)}$$

$$\hat{G}_2(S) = \frac{1}{1 + \frac{2\hat{\zeta}}{\hat{\omega}_M}s + \left(\frac{s}{\hat{\omega}_M}\right)^2}$$

FIG. 15

0 012 620

FIG. 16A

$$\frac{\partial J}{\partial \hat{\alpha}_i} , \frac{\partial J}{\partial \hat{\beta}_i}$$

FIG. 16B